Europäisches Patentamt

(19) European Patent Office

Office européen des brevets

(11) Numéro de publication: **0 125 979**
**B1**

(12) **FASCICULE DE BREVET EUROPEEN**

(45) Date de publication du fascicule du brevet:
**19.11.87**

(51) Int. Cl.⁴: **H 04 L 27/14**

(21) Numéro de dépôt: **84400905.0**

(22) Date de dépôt: **03.05.84**

(54) **Démodulateur de signaux, à enveloppe constante et phase continue, modulés angulairement par un train de symboles binaires.**

(30) Priorité: **10.05.83 FR 8307798**

(43) Date de publication de la demande:
**21.11.84 Bulletin 84/47**

(45) Mention de la délivrance du brevet:
**19.11.87 Bulletin 87/47**

(84) Etats contractants désignés:
**DE GB**

(56) Documents cités:
**US - A - 4 087 752**

**INTERNATIONAL CONFERENCE ON COMMUNICATIONS, 10-14 juin 1979, Boston, MA., vol. 3, pages 42.4.1 - 42.4.6, IEEE, New York, US; T. AULIN et al.: "Bandwidth efficient digital FM with coherent phase tree demodulation"**

(73) Titulaire: **THOMSON-CSF, 173, Boulevard Haussmann, F-75379 Paris Cédex 08 (FR)**

(72) Inventeur: **Laurent, Pierre, THOMSON-CSF SCPI 173, bld Haussmann, F-75379 Paris Cedex 08 (FR)**
Inventeur: **Ganem, Hervé, THOMSON-CSF SCPI 173, bld Haussmann, F-75379 Paris Cedex 08 (FR)**

(74) Mandataire: **Turlèque, Clotilde et al, THOMSON-CSF SCPI 19, avenue de Messine, F-75008 Paris (FR)**

## Description

L'invention se rapporte à la démodulation de signaux d'informations binaires transmis par modulation angulaire d'une porteuse, et a plus particulièrement pour objet un démodulateur de signaux à enveloppe constante et phase continue, modulés angulairement par un train de symboles binaires (en anglais «CPM: Continuous phase modulation»).

Les modulations à enveloppe constante sont très largement utilisées actuellement dans les radiocommuncations du fait de leur immunité aux distorsions non linéaires d'amplitude. Parmi ces techniques de modulation, les modulations dans lesquelles la variation de phase a lieu exclusivement pendant la durée de transmission d'un élément binaire d'information (modulations à réponse totale) conduisent à une occupation spectrale importante qui limite le nombre de canaux susceptibles d'être transmis dans une bande de fréquence de largeur déterminée. La modulation de fréquence à phase continue, dans laquelle la variation de phase due à un élément binaire est étalée sur plusieurs éléments binaires (modulation à réponse partielle), présente des propriétés intéressantes en ce qui concerne l'encombrement spectral, assez réduit.

Classiquement la démodulation est réalisée, soit dans un démodulateur cohérent, avec une référence de phase, soit dans un démodulateur non cohérent, qui peut être de type différentiel.

Un démodulateur cohérent, du type de celui décrit dans le brevet USP 4 087 752, évalue à un instant donné la fréquence du signal ou sa phase par rapport à celle d'un oscillateur de référence. Pour cela, le démodulateur cohérent est associé à une boucle d'asservissement de phase, nécessitant un temps d'adaptation incompatible de certains types d'applications, du type liaisons à saut de fréquence. En effet, il est difficile d'obtenir à tout instant une référence de phase convenable du fait que la rotation aléatoire de phase dans le canal de transmission varie avec la fréquence, donc à chaque saut de fréquence.

Par ailleurs, une démodulation non cohérente du type démodulation différentielle n'est pas toujours adaptée à la démodulation de signaux dans lesquels la variation de phase est étalée sur plusieurs éléments binaires, du fait de l'interférence intersymboles.

L'invention a pour objet un démodulateur de typ non cohérent c'est-à-dire qui ne nécessite pas d'oscillateur de référence calé sur la phase du signal reçu de réalisation assez simple, mais qui permet de démoduler les signaux à modulation angulaire plus complexe dans lesquels la variation de phase due à un élément binaire est étalée sur une durée plus grande que la durée d'un élément binaire, pour minimiser l'encombrement spectral. Pour cela, le démodulateur détecte l'information non pas directement à partir du signal reçu lui-même, mais, sur une fenêtre de durée égale à $\dot{P}$ symboles, à partir d'un signal proche du signal reçu composé d'impulsions élémentaires modulées en amplitude et déphasées les unes par rapport aux autres. La suite d'éléments binaires d'informations est alors établie à partir d'un algorithme de démodulation mis en œuvre à partir d'échantillons à la fréquence des éléments binaires prélevés dans le signal d'autocorrélation.

Suivant l'invention, un démodulateur de signaux à enveloppe constante et phase continue modulés angulairement par un train de symboles binaires, comportant un coupleur à déphasage $\frac{\pi}{2}$ pour décomposer l'enveloppe complexe du signal reçu en deux composantes en quadrature, l'entrée du coupleur étant reliée à l'entrée du signal reçu en fréquence intermédiaire et chacune de ses sorties étant reliée à un mélangeur ramenant les composantes du signal en bande de base, deux échantillonneurs et un circuit de démodulation relié aux sorties des échantillonneurs, est caractérisé en ce que l'enveloppe complexe du signal reçu étant assimilée à une suite d'impulsions élémentaires modulées en amplitude suivant une fonction dite fonction principale, et déphasées régulièrement les unes par rapport aux autres, la fonction principale étant associée à l'impulsion caractéristique de la modulation réalisée à l'émission, le démodulateur comporte en outre deux filtres, adaptés à la fonction principale, respectivement reliés aux sorties des mélangeurs et dont les sorties sont reliées aux entrées des deux échantillonneurs, le circuit de démodulation utilisant des échantillons des composantes en quadrature du signal modulé approché issues des filtres adaptés.

Des démodulateurs apparentés sont décrits dans le document EP-A-84 400 560.3, publié le 3.10.1984.

L'invention sera mieux comprise et d'autres caractéristiques apparaîtront à l'aide de la description qui suit en référence aux figures annexées.

– Les figures 1 et 2 représentent respectivement l'impulsion de fréquence g(t) et la fonction principale $F_p(t)$ caractéristiques d'une modulation MSK;

– Les figures 3 et 4 représentent respectivement l'impulsion de fréquence g(t) et la fonction principale $F_p(t)$ caractéristiques d'un modulation SRC-4;

– La figure 5 est un exemple de signal de modulation émis, représenté sous sa forme linéaire approchée;

– La figure 6 est le schéma synoptique d'un mode de réalisation du démodulateur suivant l'invention.

La modulation MSK (Minimum Shift Keying dans la littérature anglo-saxonne) est un exemple simple et classique de modulation à phase continue. C'est une modulation de fréquence dans laquelle la variation de phase est linéaire, avec un indice de modulation égal à $\frac{1}{2}$ , et dont le support est égal à un seul élément binaire. Cette modulation est équivalente à une modulation d'amplitude de deux porteuses en quadrature, et cette interprétation, classique, a permis de réaliser de manière relativement simple des modulateurs et des démodulateurs MSK.

En pratique comme indiqué ci-dessus, d'autres types de modulations à enveloppe constante et phase continue peuvent être intéressantes, en particulier des modulations dans lesquelles:

– la forme de la variation de phase peut être plus complexe;

– l'indice de modulation peut être différent de $\frac{1}{2}$ ;

– la durée de la rotation de phase caractéristique de la modulation est supérieure à la durée T d'un élément binaire (modulations à réponse partielle).

Le calcul, développé dans la demande de brevet français n° 2 543 382 au nom de la Demanderesse, publiée le 28.9.1984, montre que tous les signaux modulés par une modulation à enveloppe constante et phase continue peuvent s'exprimer sous forme d'une superposition d'impulsions modulés en amplitude et décalées en temps et en phase les unes par rapport aux autres. De plus, dans les cas habituellement rencontrés, la plus grande partie de l'énergie du signal est concentrée dans une série d'impulsions décrites par ce que l'on appelle la «fonction principale». Cette remarque fondamentale permet d'établir de façon approchée les caractéristiques du signal modulé en se limitant à cette fonction principale, ce qui permet de simplifier notablement les circuits, de la façon suivante:

L'indice de modulation h étant connu, par exemple h = $\frac{1}{2}$ , et la série d'éléments binaires modulants étant $\underline{a}$ = $|a_n|$, n variant de 0 à l'infini, la variation de phase due au $n^{ième}$ élément binaire est telle que:

$$\Delta\varphi_n(t) = a_n\varphi(t-nT) \; t\,E\Big[0\,,\,LT\Big]$$

où la variation de phase $\varphi(t)$ caractéristique de la modulation est telle que:

$$\varphi(t) = 2\pi h \int_{-\infty}^{t} g(\theta)d\theta$$

Dans cette expression, $\theta$ est la variable d'intégration, h est l'indice de modulation, comme indiqué ci-dessus, et g(t) est une impulsion de fréquence caractérisant la modulation. Cette impulsion n'existe que pendant une durée LT, où T est la durée d'un élément binaire d'information et L un nombre entier, LT étant la durée sur laquelle est étalée la rotation de phase due à un élément binaire d'information.

Cette impulsion de fréquence est normalisée de façon que:

$$\int_{0}^{LT} g(\theta)d\theta = \frac{1}{2} \; ; \; g(\theta) = 0 \text{ en dehors de } (0, LT)$$

Ainsi le signal modulé complet est représenté par une exponentielle complexe résultant de la superposition des variations de phase dues aux éléments binaires modulants $a_n$ que l'on peut écrire:

$$x(t, \underline{a}) = \sqrt{\frac{2E}{T}} \exp(j\varphi(t,a)\,)$$

où E est l'énergie par symbole émis, T la durée d'un symbole. La loi de variation de phase $\varphi(t,\underline{a})$ a pour expression:

$$\varphi(t,\underline{a}) = 2\pi h \int_{-\infty}^{-\infty} \sum_{n=-\infty}^{+\infty} a_n \cdot g(t-nT)dt$$

lorsque les éléments binaires $a_n$ sont transmis sans codage à l'émission.

Il est également possible de transmettre les éléments binaires modulants en suivant la loi de variation de phase suivante:

$$\varphi'(t,\underline{a}) = 2\pi h \int_{-\infty}^{+\infty} \sum_{n=-\infty}^{+\infty} a_{n-1} \cdot a_n \cdot g(t-nT)dt$$

Cette forme permet en effet d'obtenir plus directement à la réception la série $\underline{a}$ d'éléments binaires $a_n$.

C'est cette forme qui est retenue dans la description qui suit.

Dans ce dernier cas, le calcul montre que si l'indice de modulation h est égal à $\frac{1}{2}$ , le signal modulé correspondant, $x'(t,\underline{a})$, peut s'écrire sous la forme suivante:

$$x'(t,\underline{a}) = \left(\sum_{n=-\infty}^{+\infty} (j)^n b_n F_p(t-nT) + E(t)\right)$$

E(t) est une fonction résiduelle qui peut généralement être négligée, $F_p(t)$ est une impulsion réelle de durée (L+1)T, appelée fonction principale, et déterminée uniquement par l'impulsion de fréquence g(t) caractéristique de la modulation; $b_n$ = $\pm 1$ est défini à partir des symboles émis par: $b_n$ = $Sa_n$, S étant un signe, fixé arbitrairement et une fois pour toutes, qui correspond, à la réception, à une indétermination de $\pi$ sur la phase initiale. Dans la suite on suppose S = 1, un dispositif de levée d'ambiguïté en aval du démodulateur étant prévu si nécessaire.

$$\sum_{n=-\infty}^{+\infty} j^n b_n F_p(t-nT) \text{ est la forme linéaire appro-}$$

chée de l'envelopppe complexe du signal modulé pour lequel le démodulateur est construit.

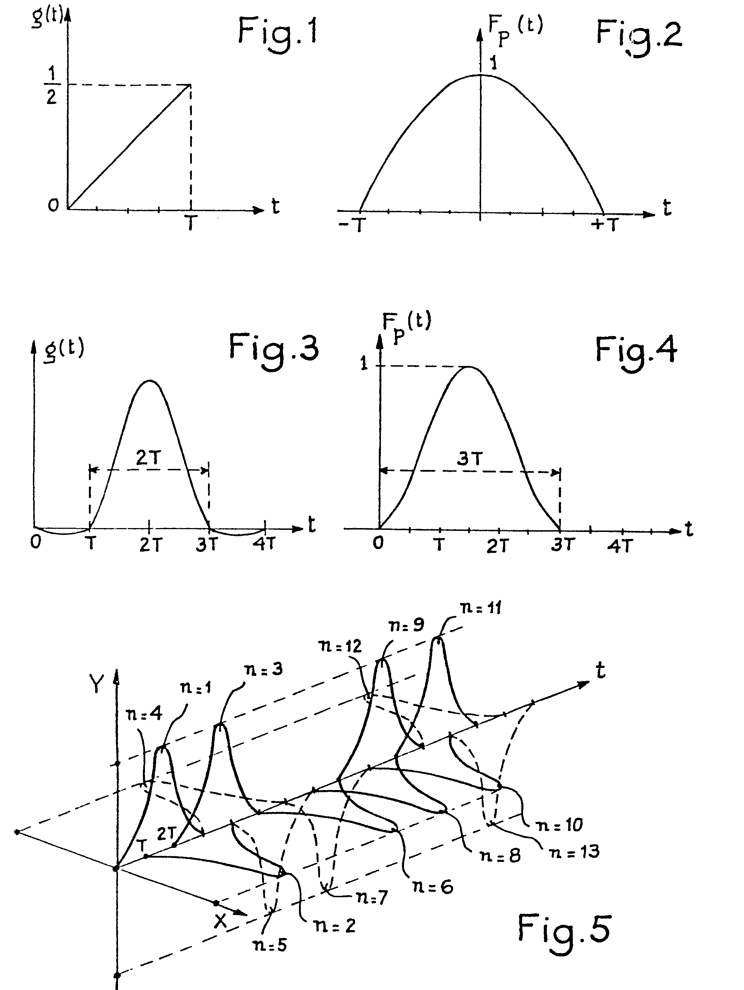

A titre d'exemple, les figures 1 et 2 représentent respectivement l'impulsion de fréquence g(t) et la fonction principale $F_p(t)$ correspondante pour une modulation MSK, modulation de fréquence à phase continue d'indice de modulation $h = \frac{1}{2}$,

dans laquelle L=1: la variation de phase due à un élément binaire est linéaire et ne s'étend que sur une durée T égale à la durée d'un élément binaire.

Dans ce cas $g(t) = \frac{t}{2T}$ pour $t \, (-(0,T)$ et $g(t) = 0$ en dehors de $(0,T)$

alors $F_p(t) = \cos \frac{\pi t}{2T}$ pour $t \, (-T, +T)$ et 0 ailleurs.

De la même manière, les figures 3 et 4 représentent respectivement l'impulsion de fréquence g(t) et la fonction principale $F_p(t)$ pour une modulation de fréquence à phase continue d'indice de modulation $h = \frac{1}{2}$, dans laquelle L=4, la variation de phase étant définie par l'impulsion de fréquence:

$$g(t) = \frac{k \sin \pi X}{\pi . X(1-X^2)} \quad \text{pour } t \, (0,4T) \text{ avec } X = \frac{2t}{T} - 4,$$

s'étendant donc sur une durée de 4 éléments binaires. Cette modulation est dite «SRC4» (Spectral raised Cosine, L=4) et a été présentée lors d'une conférence à Miami au Globecom, 1982 intitulée «Non coherent detection of controlled-phase modulated signals» par J.S. Bourgenot et H. Ganem. Comme le montre la figure 3, presque toute l'énergie de l'impulsion est concentrée dans le lobe principal, qui s'étend sur 2T. Les lobes latéraux contribuent seulement au lissage du signal de phase, de manière à minimiser l'encombrement spectral du signal émis. De ce fait l'information qu'ils véhiculent est quasiment nulle et ils sont négligés lors de la démodulation où l'on considère que l'impulsion g(t) a une durée 2T. La fonction principale $F_p(t)$ a donc une durée 3T, comme le montre la figure 4.

La figure 5 représente un exemple de signal émis en modulation SCR4, en bande de base sous sa forme linéaire approchée, dans un trièdre (X, Y, t) dans lequel l'axe X est l'axe réel, l'axe Y est l'axe des imaginaires et t est l'axe des temps. Les impulsions $F_p(t-nT)$ avec n pair, correspondant aux composantes réelles, sont représentées dans le plan X0t, les impulsions $F_p(t-nT)$ avec n impair correspondant aux composantes imaginaires sont représentées dans le plan Y0t. Les valeurs successives de n sont indiquées sur la figure pour les impulsions $F_p(t-nT)$ correspondantes.

Le signal y(t) reçu par le démodulateur transposé en bande de base est ce même signal auquel est superposé du bruit blanc n(t) avec un niveau $N_o$ dans la bande du signal, et qui, de plus, a subi une rotation de phase θ quelconque soit:

$$y(t, \underline{a}, \theta) = \text{Re}(x(t, \underline{a}) \exp(j\theta) + n(t)).$$

La notation Re(x) indique «partie réelle de x».

Pour réaliser la démodulation, le démodulateur suivant l'invention réalise un filtrage du signal reçu adapté à la fonction $F_p(t)$, c'est-à-dire un filtrage tel que la réponse impulsionnelle du filtre soit $F_p(-t)$.

Ainsi, le signal disponible après filtrage est:

$$S(t) = \sum_n (j)^n b_n R_p(t-nT) + n'(t).$$

où $R_p(t)$ est la fonction d'autocorrélation de $F_p(t)$, et n'(t) représente l'expression temporelle du signal de bruit après filtrage.

Dans le cas où le récepteur dans lequel est inclus le démodulateur comporte un dispositif de synchronisation bit, le signal après filtrage est échantillonné au rythme bit au milieu des intervalles correspondant aux transitions entre bits. En effet, c'est à ces instants que la fonction d'autocorrélation est maximum.

Il est également possible de ne pas utiliser de synchronisation bit extérieure au démodulateur de la manière suivante: le signal après filtrage est chantillonné plusieurs fois pendant la durée d'un élément binaire par exemple 3 fois. Puis, le processus de démodulation (en particulier le calcul des métriques décrit ci-dessous) est effectué autant de fois en parallèle. L'échantillonnage optimum est déduit en observant le comportement des métriques.

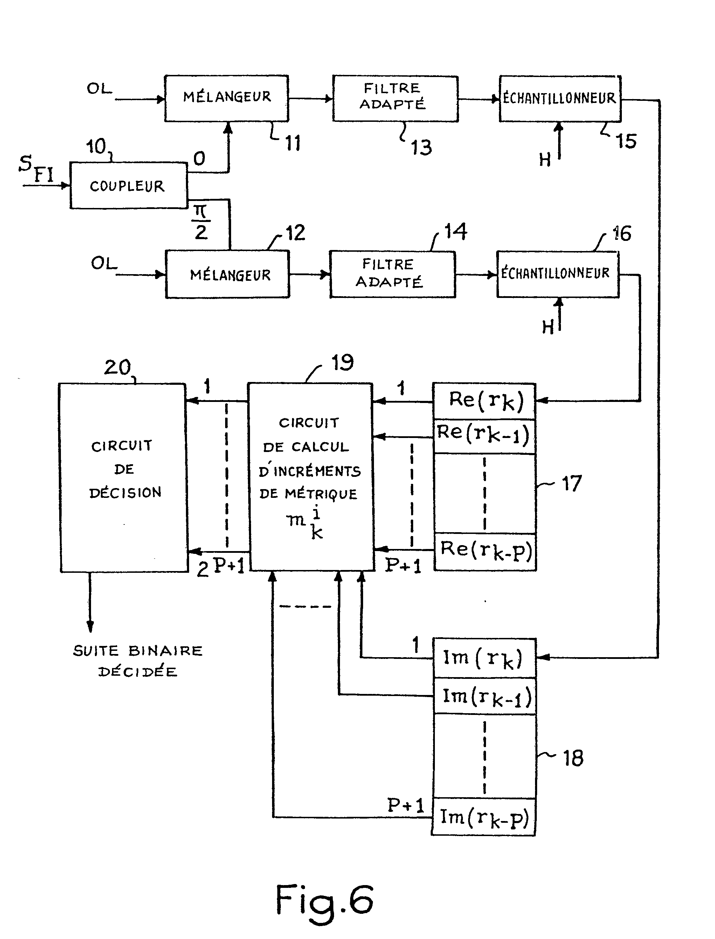

Le démodulateur suivant l'invention est représenté sur la figure 6 et est constitué de la manière suivante.

La porteuse modulée reçue, transposée en fréquence intermédiaire $S_{FI}$, estappliquée à l'entrée d'un coupleur 3 dB à déphasage $\frac{\pi}{2}$, 10, qui délivre sur ses sorties des porteuses en quadrature I et Q. Les sorties de ce coupleur sont reliées aux premières entrées de deux mélangeurs, 11 et 12, dont les secondes entrées reçoivent un signal d'oscillation locale OL, à la fréquence de la porteuse à fréquence intermédiaire. Les signaux de sortie de ces mélangeurs comportent un signal en bande de base qui est le signal de modulation auquel est superposée une composante de bruit. Ces signaux sont appliqués aux entrées de deux filtres identiques 13 et 14 adaptés à la fonction principale correspondant au type de modulation réalisé à l'émission, telle qu'elle est définie ci-dessus. Un filtre adapté à une fonction $F_p(t)$ est celui qui a comme réponse impulsionnelle $F_p(-t)$.

Ces filtres peuvent avantageusement, pour les débits élevés, être des filtres à ondes acoustiques.

Les sorties des deux filtres sont respectivement reliées aux entrées de deux échantillonneurs, 15 et 16, qui ont par ailleurs chacun une entrée de commande d'échantillonnage recevant un signal d'horloge H à la fréquence des éléments binaires d'information. Cette horloge est fournie par un dispositif de synchronisation bit non représenté sur la figure. Ainsi les signaux de sortie des filtres adaptés sont échantillonnés une fois par élément binaire.

Les sorties des échantillonneurs 15 et 16 sont reliées aux deux entrées de deux piles mémoires FIFO (premier entré–premier sorti) 17, 18 à P+1 étages, P étant un nombre entier supérieur ou égal à 1 mais pas trop grand, inférieur ou égal à 5 par exemple, pour limiter la complexité. Cette mémoire est utilisée pour ranger les échantillons complexes $r_k$ résultants de l'échantillonnage des deux porteuses en quadrature. A un instant donné, suite à l'échantillonnage, les échantillons en mémoire sont pour la première pile, 17, les parties réelle des échantillons complexes, $RE(r_k)$, ... $Re(r_{k-p})$ et pour la seconde pile, 18, les parties imaginaires $Im(r_k)$ ... $Im(r_{k-P})$. A chaque instant tous les étages de cette double pile mémoire sont accessibles. Les $2(P+1)$ sorties correspondantes sont reliés à un circuit de calcul 19. Ce circuit calcule les $2^{P+1}$ métriques de branches, $1 < i < 2^{P+1}$ associées aux $2^{P+1}$ suites possibles de P+1 symboles $a_k$... $a_{k-P}$ et définies de la manière suivante:

$$m_k^i = \sum_{q=1}^{q=P} \hat{a}_k \hat{a}_{k-q} \, Re(j^{-q} r_k r^*_{k-q})$$ où $r^*_{k-q}$ est l'échantillon complexe conjugué de l'échantillon $r_{k-q}$, et $\hat{a}_k$ et $\hat{a}_{k-q}$ indiquent les symboles binaires choisis comme références pour le calcul de la métrique de branche correspondante.

Ce calcul est réalisé par un circuit à microprocesseur convenablement programmé.

Ces $2^{P+1}$ métriques de branches, calculées à chaque période, sont transmises à un circuit de décision 20, qui met en œuvre un algorithme de programmation dynamique de type VITERBI largement décrit dans la littérature, par exemple dans un article de Proc. I.E.E.E Vol. 61, pages 268 à 273, de mars 1973, intitulé «The VITERBI ALGORITHM».

Cet algorithme est organisé autour d'un treillis de $2^P$ états représentant, à l'étape n, les $2^P$ suites possibles pour les P derniers bits.

Les métriques des branches associent un poids à chaque prolongement possible des $2^P$ suites, aux chemins de l'étape n: chaque suite pouvant être prolongée par un un ou un zéro, on a $2^{P+1}$ métriques de branche possibles aboutissant chacune à l'un des $2^P$ états de l'étape (n+1). En fait, chacun des états de l'étapes (n+1) peut être obtenue en prolongeant 2 chemins aboutissant à 2 des états de l'étape n.

Exemple P = 2:
Il y a 4 états dans le treillis correspondant aux suites 00, 01, 10, 11.

étape n   étape n+1

L'algorithme de Viterbi consiste à trouver un cheminement, optimum, dans le treillis: à l'étape n on dispose de $2^P$ chemins aboutissant chacun à un des états du treillis. A chaque chemin est associé un poids obtenu en sommant les métriques $m_i^k$ des branches dont il est constitué. Le passage de l'étape n à l'étape n+1 consiste à trouver le chemin de poids maximum aboutissant à chacun des états de l'étape n+1 et obtenur par prolongement d'un chemin aboutissant à un état de l'étape n, suivant une des 2 branches possibles de manière à maximiser son poids.

L'invention n'est pas limitée au mode de réalisation du démodulateur précisément décrit et représenté. En particulier, comme indiqué ci-dessus, il est possible, au lieu d'utiliser un signal de synchronisation extérieur au rythme H des éléments binaires, d'utiliser un signal d'échantillonnage à un rythme multiple de H et d'estimer la synchronisation bit en exécutant plusieurs fois le même algorithme en parallèle et en sélectionnant ensuite le signal d'échantillonnage correspondant aux métriques maximales.

**Revendications**

1. Démodulateur de signaux à enveloppe constante et phase continue modulés angulairement par un train de symboles binaires comportant un coupleur (10) à déphasage $\frac{\pi}{2}$ pour décomposer l'enveloppe complexe du signal reçu en deux composantes en quadrature, l'entrée du coupleur étant reliée à l'entrée du signal reçu en fréquence intermédiaire et chacune de ses sorties étant reliée à un mélangeur (11, 12) ramenant les composantes du signal en bande de base, deux échantillonneurs (15, 16) et un circuit de démodulation relié aux sorties des échantillonneurs, caractérisé en ce que l'enveloppe complexe du signal reçu étant assimilée à une suite d'impulsions élémentaires modulées en amplitude suivant une fonction dite fonction principale, $F_p(t)$ et déphasées régulièrement les unes par rapport aux autres, la fonction principale étant associée à l'impulsion g(t) caractéristique de la modulation réalisée à l'émission, le démodulateur comporte en outre deux filtres (13, 14) adaptés à la fonction principale $F_p(t)$, respectivement reliés aux sorties des mélangeurs (11, 12) dont les sorties sont reliées aux entrées des deux échantillonneurs (15, 16) le circuit de démodulation utilisant des échantillons des composantes en quadrature du signal modulé approché issues des filtres adaptés.

2. Démodulateur selon la revendication 1, caractérisé en ce que les sorties des échantillonneurs étant reliées aux entrées de deux mémoires à décalage (17, 18) à P+1 étages comportant, l'une la partie réelle, et l'autre la partie imaginaire de P+1 échantillons complexes consécutifs, les échantillons étant décalés d'un étage au rythme T des éléments binaires, les sorties des (P+1) étages de chacune de ces mémoires étant reliées à $2(P+1)$ entrées d'un circuit (19) de calcul de métriques de branches associées, à chaque pas d'horloge, à chacune des $2^{P+1}$ suites possibles de $(P+1)$ éléments binaires, et un circuit de décision (20) relié aux sorties du circuit de calcul (19) mettant en œuvre un algorithme de programmation dynamique du type algorithme de VITERBI pour décider à chaque pas d'horloge la valeur d'un élément binaire en recherchant le chemin pour lequel la somme des métriques de branches correspondantes est maximum.

3. Démodulateur selon la revendication 2, adapté à la démodulation de signaux modulés dans lequel l'impulsion caractéristique de la modulation est $g(t) = \dfrac{k\sin\pi X}{\pi X(1-X^2)}$ , avec $X = 2\dfrac{t}{\pi} - 4$ sur une durée telle que $0 < t < T$, où k est une constante de normalisation, caractérisé en ce que les filtres (13, 14) sont adaptés à la fonction principale $F_p(t)$ correspondante.

**Patentansprüche**

1. Demodulator für Signale mit konstanter Hüllkurve und kontinuierlicher Phase, die durch eine Folge von Binärsymbolen winkelmässig moduliert sind, mit einem Koppler (10) einer Phasenverschiebung von $\pi/2$ zur Zerlegung der komplexen Hüllkurve des empfangenen Signals in zwei Komponenten in Quadratur, wobei der Eingang des Kopplers an den Empfangssignaleingang im Zwischenfrequenzband und jeder der Ausgänge des Kopplers an eine Mischstufe (11, 12) angeschlossen ist, die die Signalkomponenten ins Basisband bringen, mit zwei Tastkreisen (15, 16) und einem Demodulationskreis, der an die Ausgänge der Tastkreise angeschlossen ist, dadurch gekennzeichnet, dass die komplexe Hüllkurve des Empfangssignals einer Folge von Elementarimpulsen gleichgesetzt ist, die gemäss einer Funktion ($F_p(t)$), Hauptfunktion genannt, amplitudenmoduliert und regelmässig gegeneinander phasenverschoben sind, dass die Hauptfunktion dem charakteristischen Impuls $g(t)$ der auf der Sendeseite durchgeführten Modulation zugeordnet ist und dass der Demodulator ausserdem zwei Filter (13, 14) aufweist, die an die Hauptfunktion $F_p(t)$ angepasst sind und an je einen Ausgang der Mischstufen (11, 12) angeschlossen sind, wobei die Ausgänge der Filter an die Eingänge der beiden Tastkreise (15,16) angeschlossen sind und der Demodulationskreis Tastproben der in Quadratur liegenden Komponenten des angenäherten modulierten Signals verwendet, die von den angepassten Filtern stammen.

2. Demodulator nach Anspruch 1, dadurch gekennzeichnet, dass die Ausgänge der Tastkreise an die Eingänge von zwei Schiebespeichern (17, 18) mit je P+1 Stufen angeschlossen sind, von denen der eine den realen und der andere den imaginären Teil von P+1 aufeinanderfolgenden komplexen Tastproben enthält, dass die Tastproben im Rhythmus T der Binärelemente um eine Stufe verschoben werden und die Ausgänge der P+1 Stufen jedes der Speicher an 2(P+1) Eingänge eines Rechenkreises (19) zur Metrikberechnung von zugeordneten Zweigen bei jedem Taktschritt und jeder der $2^{P+1}$ möglichen Folgen von (P+1) Binärelementen angeschlossen sind, und dass ein Entscheidungskreis (20), der an die Ausgänge des Rechenkreises (19) angeschlossen ist, einen dynamischen Programmieralgorithmus vom VITERBI-Typ anwendet, um bei jedem Taktschritt den Wert eines Binärelements zu entscheiden, indem der Weg gesucht wird, für den die Metriksumme von entsprechenden Zweigen am grössten ist.

3. Demodulator nach Anspruch 2, der an die Demodulation von modulierten Signalen angepasst ist und in dem der charakteristische Modulationsimpuls

$$g(t) = (k\sin\pi X)/(\pi X(1-X^2))$$

ist, mit $X = 2\, t/\pi - 4$ über eine solche Dauer, dass $0 < t < T$, wobei k eine Normalisationskonstante ist, dadurch gekennzeichnet, dass die Filter (13, 14) an die entsprechende Hauptfunktion $F_p(t)$ angepasst sind.

**Claims**

1. A demodulator for demodulating signals with a constant envelope and a continuous phase, these signals being angularly modulated by a train of binary symbols, comprising a coupler (10) with $\pi/2$ phase shift for decomposing the complex envelope of the received signal into quadrature components, the input of the coupler being connected to the intermediate frequency signal input and each one of its outputs being connected to a mixer (11, 12) transposing the signal components into the base band, two samplers (15, 16) and a demodulation circuit connected to the output of the samplers, characterized in that the complex envelope of the received signal being assimilated to a succession of elementary pulses, which are amplitude modulated according to a function called main function $F_p(t)$ and which are regularly phase-shifted one with respect to the others, the main function being associated to a characteristic pulse $g(t)$ of the modulation realised at the transmission side, the demodulator further comprises two filters (13, 14) matched to the main function $F_p(t)$ and respectively connected to the ouputs of the mixers (11, 12), the outputs of the filters being connected to the inputs of the two samplers (15, 16), the demodulation circuit using samples of the components in quadrature of the approached modulated signal supplied by the matched filters.

2. A demodulator according to claim 1, characterized in that the outputs of the samplers are connected to the inputs of two shifts memories (17, 18) having P+1 stages, one comprising the real part and the other the imaginary part of P+1 successive complex samples, the samples being shifted by one stage at the rythm T of the binary elements, the outputs of the (P+1) stages of each one of these memories being connected to 2(P+1) inputs of a circuit (19) for computing the metrics of associated branches, at each clock step and at each one of the $2^{P+1}$ possible combinations of (P+1) binary elements, and a decision circuit (20) connected to the outputs of the computing circuit (19) realising a dynamic programming algorithm of the VITERBI type in order to decide at each clock step the value of a binary element by looking for the way for which the sum of the metrics of corresponding branches assumes a maximum value.

3. A demodulator according to claim 2, adapted to the demodulation of modulated signal, in which the characteristic pulse of the modulation is

$$g(t) = (k\sin\pi X)/(\pi X(1-X^2))$$

with $X = 2\ t/\pi - 4$ over such a duration, that $0 < t < T$, wherein k is a normalisation constant, characterized in that the filters (13, 14) are matched to the corresponding main function $F_p(t)$.

0 125 979

1/2

Fig.1

Fig.2

Fig.3

Fig.4

Fig.5

9

Fig.6